# NEW EUROPEAN PATENT SPECIFICATION

(11) **EP 0 519 544 B2**
(45) Date of publication and mention of the opposition decision: **17.01.2001**
(45) Mention of the grant of the patent: 03.04.1996
(21) Application number: 92201630.8
(22) Date of filing: 05.06.1992
(51) Int. Cl.: A01J 7/00

(54) **An implement for milking animals**
Gerät zum Melken von Tieren
Dispositif de traite d'animaux

(30) Priority: 10.06.1991 NL 9100992
(43) Date of publication of application: 23.12.1992
(60) Divisional application: 95202498.2
(73) Proprietor: MAASLAND N.V., 3155 PD Maasland (NL)
(72) Inventor: van der Lely, Edwin, NL-3155 PD Maasland (NL); van den Berg, Karel, NL-2971 BR Bleskensgraaf (NL); Fransen, René, NL-3135 ZD Vlaardingen (NL)
(74) Representative: Corten, Maurice Jean F.M.

(56) References cited:
- EP-A- 0 188 303
- EP-A- 0 213 660
- EP-A- 0 300 582
- EP-A- 0 323 875
- EP-A- 0 360 354
- WO-A-85/02973
- SU-A- 1 547 786
- US-A- 3 605 695
- US-A- 3 624 739
- US-A- 3 789 798
- US-A- 4 941 433
- LANDTECHNIK. vol. 45, no. 12, December 1990, HANNOVER DE pages 437 - 440 VON RUDOLF ARTMANN ET AL. 'ENTWICKLUNGSSTAND VON MELKROBOTERN'
- "Pneumatics for Robot Control", Proceedings of the third Symposium Automation in Dairying organized by IMAG, 9-11.09.87, pp 296-308
- "Entwicklungsstand von Melkrobotern", Landtechnik, vol. 45, No. 12, Dec. 1990, pp 437-440

## Description

The present invention relates to an implement for milking animals as described in the preamble of claim 1.

Such an implement is known from WO-A-85/02973.

This implement is improved by the features of the characterizing part of claim 1.

In accordance with a further feature of the invention, the milking robot, seen in the vertical direction, is arranged more closely to the ground than the guide elements, so that the lower part of the milking parlour can be swung between the lowest guide element and the floor of the milking parlour under the animal's udder. In a specific embodiment, the first frame portion is located predominantly above the second frame portion. As a result, there is obtained a spatially advantageous construction, in which the frame portions do not constitute an obstacle to the milking robot arms. In accordance with the invention, the carrier frame can be moved with the aid of roller elements along the upper frame portion. This carrier frame preferably extends from the upper frame portion to approximately the height at which the lower frame portion is located. In a specific embodiment, the carrier frame is moved by means of a motor provided thereon and a roller driven by this motor along the upper frame portion. The lower frame portion may also be constituted by a rail, in which case the carrier frame of the milking robot is provided with a roller element, by means of which the carrier frame, when it is moved along the upper frame portion, bears also on the lower frame portion.

In accordance with a further feature of the invention, the milking robot includes a sensor, by means of which the milking robot can be directed from a rest position into the longitudinal direction of the milking parlour to a start position, from which the arms of the milking robot are moved to under the animal present in the milking parlour, and the movements of the animal in the longitudinal direction of the milking parlour can be followed. Therefore, the invention also relates to an implement for milking animals, such as cows, comprising a milking parlour and a milking robot for the automatic milking of animals, characterized in that the milking robot includes a sensor, by means of which the milking robot can be directed from a rest position into the longitudinal direction of the milking parlour to a start position, from which the arms of the milking robot are moved to under the animal present in the milking parlour, and the movements of the animal in the longitudinal direction of the milking parlour can be followed. More particularly, for that purpose there is provided a supporting element which is movable against the rear side of the animal and can cooperate with the sensor, i.e. in such a manner that when the animal moves in the longitudinal direction of the milking parlour, the supporting element is moved along and consequently, while preserving the supporting element-to-sensor distance in the longitudinal direction, the milking robot. In a concrete embodiment, the supporting element then includes a plate which is disposed such that it laterally extends beyond the frame portions, and from the actual distance between the plate and the sensor there is derived a control signal for the motor to move the milking robot into the longitudinal direction of the milking parlour, with the aid of which control signal the distance between the plate and the sensor is readjusted to a preset value.

In accordance with a further feature of the invention, the milking robot includes a robot arm construction which is movable in a predominantly vertical direction, e.g. using a quadrangular pivot construction, relative to the carrier frame by means of an operating cylinder, such as a servo-pneumatic positioning cylinder. In this construction, it is advantageous for one of the arms of the quadrangular pivot construction, which forms the connection between the robot arm construction and the carrier frame, to be adjustable in length. Therefore, the invention also relates to an implement for milking animals, such as cows, comprising a milking parlour and a milking robot for the automatic milking of animals, characterized in that the milking robot includes a robot arm construction which is movable in a predominantly vertical direction, e.g. using a quadrangular pivot construction, relative to the carrier frame by means of an operating cylinder, such as a servo-pneumatic positioning cylinder. In a preferred embodiment, the robot construction includes a predominantly vertical robot arm as well as robot arms which are movable in a predominantly horizontal plane. Then, preferably, the operating cylinder is operative between the carrier frame and the predominantly vertical robot arm, while the housing of the operating cylinder preferably will be arranged pivotably on the carrier frame.

For a better understanding of the invention and to show how the same may be carried into effect, reference will now be made, by way of example, to the accompanying drawings, in which:
Figure 1 is a plan view of the implement in accordance with the invention, the arms of the milking robot being moved to under an animal present in the milking parlour;
Figure 2 is a side view of the implement shown in Figure 1, the milking robot being in the rest position;

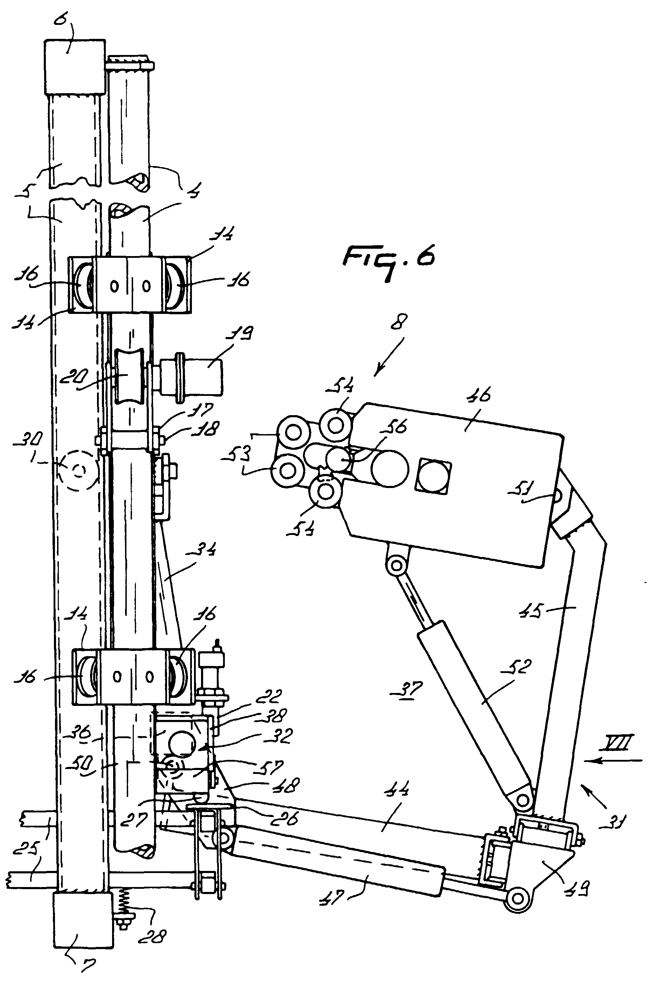

Figures 3 to 8 show in further detail several component parts of the implement illustrated in Figures 1 and 2.

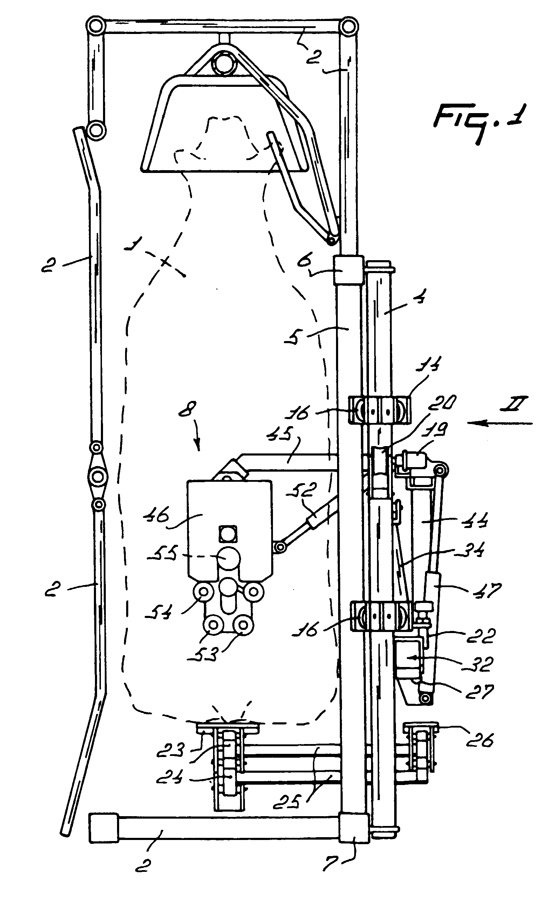

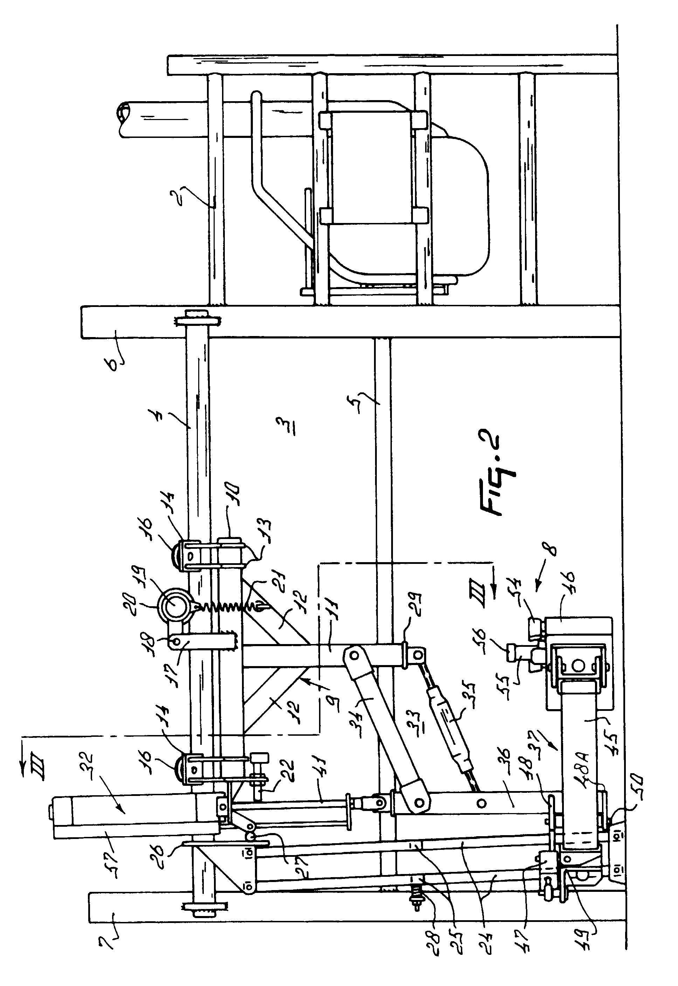

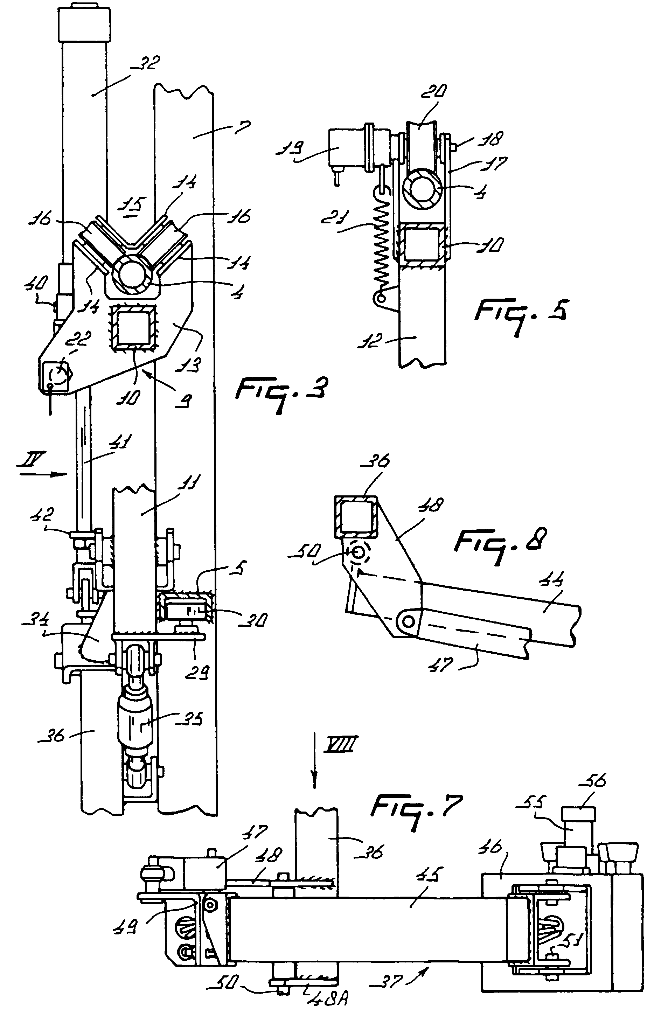

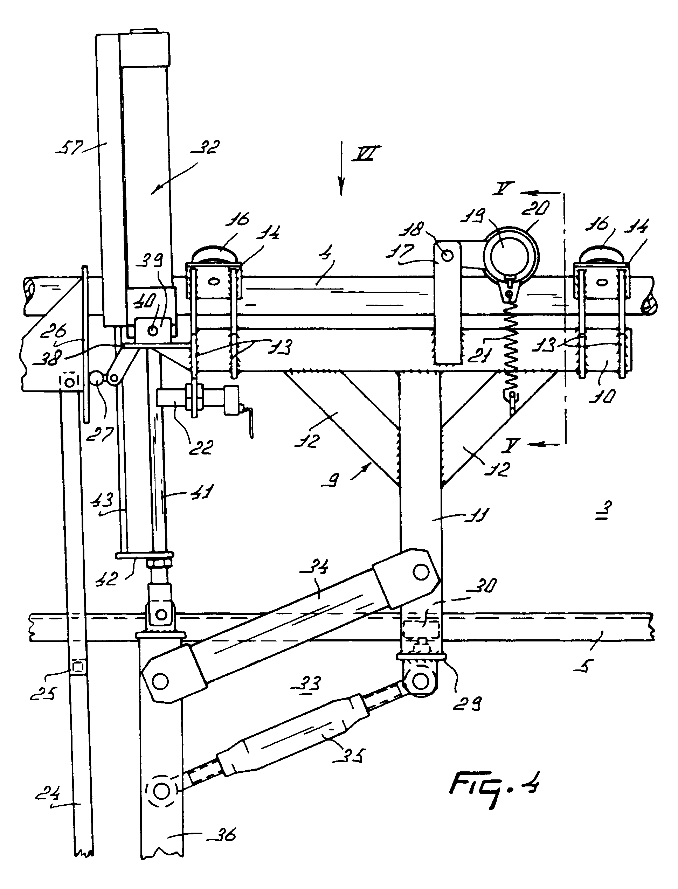

In the plan view of the implement according to Figure 1, a cow 1 is shown standing in the milking parlour, the milking parlour being surrounded by a railing 2 which allows the animal a limited freedom of movement. The animal can enter the milking parlour from a longitudinal side near the rear end, while the animal can leave it again at the same longitudinal side near the front end. As the front end of the milking parlour is provided with a feeding arrangement, the cow will advance sufficiently far to the front and arrive in a position wherein it can be milked easily. At the other longitudinal side of the milking parlour than where the entrance and exit are located, there is mounted a fixedly arranged frame 3, which frame 3 constitutes part of the railing 2 and includes a first frame portion 4 and a second frame portion 5. The first frame portion 4 extends parallel to the second frame portion 5 and is located predominantly thereabove. In this situation, the first frame portion 4 is connected rigidly to the outer side of two vertical posts 6 and 7 which constitute part of the railing 2, whilst the second frame portion 5 is arranged fixedly between these two posts 6 and 7. A milking robot 8 for the automatic milking of animals is connected movably to the first frame portion 4, while this milking robot bears on the second frame portion 5 which further is disposed at such a height that arms of the milking robot 8 can move along the bottom side thereof to under the cow present in the milking parlour. The milking robot 8 includes a carrier frame 9 for the further portions of the milking robot. By implementing the upper frame portion 4 as a rail, the carrier frame 9, and consequently the entire milking robot 8, can easily be moved therealong. The frame portion 9 includes a beam 10 which extends predominantly parallel to the first frame portion 4, a beam 11 which extends perpendicularly to the latter beam in the vertical direction and is rigidly connected thereto and two struts 12. Near the ends of the beam 10 there are arranged pairs of supporting elements 13. Two rollers 16 forming a roller element pair 15 are connected at an angle of approximately 45° to each pair of supporting elements 13 by means of supporting plates 14 rigidly connected thereto, the arrangement being such that the carrier frame 9 is suspended under the upper frame portion 4 capably of easy movement therealong. On the beam 10 of the carrier frame there is arranged at either side thereof a carrier 17. On these carriers there is fitted capably of pivotal movement about a pivot shaft 18 a motor 19. This motor 19 drives a roller 20 which preferably has a rubber surface, the roller being pushed against the upper frame portion 4 by means of a spring member 21. Since the spring member 21 is operative between the motor 19 and the carrier frame 9, the roller 20 to be driven by the motor 19 is kept against the upper frame portion 4, so that, when the motor is driven, this roller is moved along the upper side of the upper frame portion 4, and consequently also the entire carrier frame 9. A sensor 22, which e.g. includes a laser, is connected to the supporting element 13 which, taken relative to the milking parlour, is the rearmost one. With the aid of this sensor 22 it is possible to direct the milking robot from a rest position into the longitudinal direction of the milking parlour to a start position, from which the arms of the milking robot are moved to under the animal present in the milking parlour, and to follow the movements of the animal in the longitudinal direction of the milking parlour. To that end, the sensor 22 co-operates with a supporting element 23 which is movable against the rear side of the animal. With the aid of a system of rods, which in the present design is constituted by a quadrangular construction, more specifically a parallelogram construction 24, this supporting element 23 is disposed on the milking parlour floor in such a manner that it is pivotal with respect thereto. Via two rods 25, the supporting element 23 is provided with a plate 26 which is arranged laterally beyond the frame portions 4 and 5 and is positioned such that it can reflect a signal transmitted by the sensor 22. After the reflected signal has been received by the sensor 22, this sensor supplies a control signal which is a measure of the actual, i.e. measured, distance between the plate 26 and the sensor 22; the motor 19 can be controlled by this control signal, whereby the milking robot 8 can be directed in such a manner in the longitudinal direction of the milking parlour that the distance between the plate 26 and the sensor 22 can be adjusted to, or maintained at, a preset value. When the milking robot 8 is in its rest position, it has been brought into a position which is farthest possible to the rear with respect to the frame portions 4 and 5, in which situation the milking robot 8 pushes via a contact element 27 against the plate 26 and thus pushes the supporting element 23 to and keeps it in a position which is farthest possible to the rear. In other words, the supporting element 23 is locked by the milking robot 8 when the latter is in the rest position. When the milking robot is directed from this rest position into the longitudinal direction of the milking parlour to the start position, from which the arms of the milking robot are moved to under the animal present in the milking parlour, then the supporting element 23 is unlocked and is pushed under spring pressure, by means of a spring disposed between the parallelogram construction 24 and the railing 2, against the rear side of the cow then present in the milking parlour. Even though the cow advances or retreats, the supporting element 23 will always remain pushed against the rear side of the animal under the action of the spring 28, so that the position of the plate 26 determines the position of the animal in the milking parlour in the longitudinal direction and so that, by means of the sensor 22, while keeping the distance in the longitudinal direction between the plate 26 and the sensor 22 constant, the milking robot can follow the movements of the cow in the longitudinal direction of the milking parlour. In the present design, the beam 11 of the carrier frame 9 extends downwardly in the vertical direction to just below the second frame portion 5. The bottom end of this beam 11 is provided with a horizontal rearwardly extending strip 29, onto which a freely rotatable roller element 30 is disposed. The lower frame portion 5 is constituted by a rail, more specifically by a rail in the form of a U-shaped beam, the freely rotatable roller element 30 being arranged so as to be movable between the two upright edges of the U-shaped beam. Thus, the milking robot 8 bears on the lower frame portion 5 and, when the milking robot 8 is moved along the first frame portion 4 by means of the motor, it can travel easily along the second frame portion 5. In addition to the carrier frame 9, the milking robot includes a robot arm construction 31 which is movable in a predominantly vertical direction relative to the carrier frame 9 by means of an operating cylinder 32. The robot arm construction 31 is connected movably to the carrier frame 9 by a quadrangular construction 33. In the embodiment shown, the upper arm 34 of this quadrangular construction 33 is of a fixed length, whereas the lower arm 35 thereof is adjustable in length, as a result of which the orientation of the robot arm construction 31 can be adjusted to a limited extent. The robot arm construction 31 comprises a predominantly vertical robot arm 36 as well as robot arms 37 which are capable of movement in a predominantly horizontal plane. The robot arm 36 is connected to the beam 11 of the carrier frame 9 via the quadrangular construction 33. The operating cylinder 32 is operative between the carrier frame 9 and the robot arm 36. Since the orientation of the robot arm 36 is adjustable to some extent by means of the lower arm 35 of the quadrangular construction 33, the position in which the operating cylinder 32 acts on the robot arm 36 is spatially not completely determined. For this reason, the housing of the operating cylinder 32 is arranged on a carrier plate 38 attached to the beam 10 of the carrier frame 9 so as to be pivotable to a limited extent. On this carrier plate 38 there are disposed supports 39, between which the housing of the operating cylinder 32 can move about a pivot shaft 40. In the present embodiment, the operating cylinder is designed as a servo-pneumatic positioning cylinder. This means that, connected to the lower end of the piston rod 41 via a plate 42 rigidly connected thereto, there is present a position feedback rod 43, by means of which in the portion 57 of the operating cylinder by a potentiometer there is derived a signal indicating the position of the piston rod relative to the cylinder housing, while by means of the signal supplied by this potentiometer the position of the piston rod relative to the cylinder housing can be adjusted to a preset position. The operating cylinder 32 is furthermore provided with an overload protection device, so that, as soon as the animal present in the milking parlour exercises force on the robot arm construction 31, e.g. by hitting it with one of its legs, the robot arm construction 31 can be moved to its lowest position. Figures 2 and 4 show the milking robot 8 in the rest position, in which it has been moved farthest possible to the rear relative to the frame portions 4 and 5, and in which the robot arm construction 31 is brought to the lowest possible position above the soil. When the cow is present in the milking parlour and the milking procedure is to be started, the milking robot 8 is moved from the rest position into the start position, i.e. into the position in which the arms of the milking robot 8 can be moved to under the cow.

In the present embodiment, for this purpose the milking robot is provided with arms 44, 45 and 46. The arms 44 and 45 are disposed at a fixed angle of 90° relative to each other. Consequently, the arms 44 and 45 are moved jointly, more particularly by an operating cylinder 47 which is disposed between a supporting plate 48 attached to the robot arm 36 and a connection member 49 provided between the two arms 44 and 45. The two arms 44 and 45 are pivotal about a predominantly vertical pivot shaft 50 arranged between the supporting plate 48 and a supporting plate 48A, which latter plate is also rigidly connected to the robot arm 36, more specifically to the lower end thereof. With respect to the arm 45, the arm 46 is pivotable about a predominantly vertical pivot shaft 51 by means of an operating cylinder 52, which is arranged between the arm 46 and the end of the arm 45 located near the connection member 49. Near the end of the arm 46 there are fitted the teat cups 53 and 54 which are connectable to the teats of the cow. Between the two teat cups 54 there is provided a slide which is movable on the arm 46 and carries a sensor 55 which can determine accurately the position of the teats by a sector-sequential scanning motion, whereby the operating cylinders 32, 47 and 52 can be controlled such by a computer that the teat cups can be connected properly to the teats. When the robot arms 44 to 46 have been moved to under the cow, these arms are located in a relatively low position wherein the teats will not yet be detected by the sensor 55. By means of the operating cylinder 32, the robot arms 44 to 46 are now moved upwardly in steps until the sensor 55 detects one or more teats of the animal. Should during this upward movement the robot arms 44 to 46 have arrived in such a high position that the upper end of the sensor 55 pushes against the cow's abdomen, then a switch 56 located at the upper side of sensor 55 causes the robot arms to move downwards again, whereafter with the aid of the sensor 55 the determination of the position of the teats can be repeated, the robot arms being gradually moved upwards again in the process.

The invention is not limited to the embodiment described in the foregoing but also relates to all the details in the drawings, whether they have been described or not, and to all modifications in the construction in so far as they are within the framework of the appended claims.

## Claims

1. An implement for milking animals, such as cows, comprising a milking parlour and a milking robot (8) for the automatic milking of animals, the implement having a fixedly arranged frame (3), including a first, upper frame portion (4) forming a straight guide element for the milking robot (8), and having a further straight guide element for the milking robot (8), both guide elements being parallel to each other and extending in the longitudinal direction at the side of the milking parlour, while the frame (3) includes a second, lower frame portion (5) forming said further guide element, along a bottom side of which second frame portion (5) milking robot arms (37) are movable under the animal present in the milking parlour, both frame portions (4, 5) being located substantially above the ground at some distance from each other, the first frame portion (4) being constituted by a rail, while the milking robot (8) includes a carrier frame (9) for further portions of the milking robot (8) and the carrier frame (9) of the milking robot (8) being provided with a roller element (30) which is disposed alongside the carrier frame (9), by means of which the carrier frame (9), when it is moved along the upper frame portion, bears on both frame portions (4,5), characterized in that the lower frame portion (5) is constituted by a rail in the form of a U-shaped beam, which is mounted so that its upright edges point downwards, while the roller element (30) is movable between the two upright edges of the U-shaped beam.

2. An implement as claimed in claim 1, characterized in that the milking robot (8) bears on the first and second frame portion (4, 5).

3. An implement as claimed in claim 1 or 2, characterized in that the milking robot (8), seen in the vertical direction, is arranged more closely to the ground than the said frame portions (4, 5).

4. An implement as claimed in any one of the preceding claims, characterized in that the first frame portion (4) is located predominantly above the second frame portion (5).

5. An implement as claimed in any one of the preceding claims, characterized in that there is provided a motor (19) for moving the milking robot (8) relative to the frame portions (4, 5).

6. An implement as claimed in claim 5, characterized in that the carrier frame (9) can be moved with the aid of roller elements (16) along the upper frame portion (4).

7. An implement as claimed in claim 6, characterized in that the carrier frame (9) extends from the upper frame portion (4) to approximately the height at which the lower frame portion (5) is located.

8. An implement as claimed in claim 6 or 7, characterized in that, at or near its two ends, the carrier frame (9) includes two roller element pairs (16), by means of which the carrier frame (9) is suspended from the upper frame portion (4) in such a manner that it is movable therealong.

9. An implement as claimed in any one of claims 5 to 8, characterized in that the motor (19) is arranged on the carrier frame (9), while furthermore a motordriven roller (20) is provided, by means of which the carrier frame (9) can be moved along the upper frame portion (4).

10. An implement as claimed in claim 9, characterized in that the motor (19) is provided movably on the carrier frame (9) and includes a spring member (21) pushing the motor-driven roller (20) against the upper frame portion (4).

11. An implement as claimed in claim 10, characterized in that the motor-driven roller (20) is movable along the upper frame portion (4) and the spring member (21) is operative between the motor (19) and the carrier frame (9).

12. An implement as claimed in claim 10 or 11, characterized in that the roller (20) is provided with a rubber surface.

13. An implement as claimed in any one of the preceding claims, characterized in that the milking robot (8) includes a sensor (22), by means of which the milking robot (8) can be directed from a rest position into the longitudinal direction of the milking parlour to a start position, from which the arms (37) of the milking robot (8) are moved to under the animal present in the milking parlour, and the movements of the animal in the longitudinal direction of the milking parlour can be followed.

14. An implement as claimed in claim 13, characterized in that there is provided a supporting element (23) which is movable against the rear side of the animal and can co-operate with the sensor (22), i.e. in such a manner that, when the animal moves in the longitudinal direction of the milking parlour, the supporting element (23) is moved along and consequently, while preserving the supporting element-to-sensor distance in the longitudinal direction, the milking robot (8).

15. An implement as claimed in claim 14, characterized in that the supporting element (23) includes a plate (26) which is disposed such that it laterally extends beyond the frame portions (4, 5), and that from the actual distance between the plate (26) and the sensor (22) there is derived a control signal for the motor (19) to move the milking robot (8) into the longitudinal direction of the milking parlour, with the aid of which control signal the distance between the plate (26) and the sensor (22) is readjusted to a preset value.

16. An implement as claimed in claim 14 or 15, characterized in that the supporting element (23) is disposed on the milking parlour floor in such a manner that it is pivotal with respect thereto via a rod system.

17. An implement as claimed in claim 16, characterized in that the rod system is constituted by a quadrangular construction, more specifically a parallelogram construction (24).

18. An implement as claimed in any one of claims 14 to 17, characterized in that, after having been unlocked, the supporting element (23) is pushed under spring pressure against the reatr side of the animal present in the milking parlour.

19. An implement as claimed in claim 18, characterized in that the supporting element (23) is locked by the milking robot (8) when the latter is in the rest position.

20. An implement as claimed in claim 18 or 19, characterized in that the supporting element (23) is unlocked when the milking robot (8) is directed from the rest position into the longitudinal direction of the milking parlour to the start position, from which the arms (37) of the milking robot (8) are moved to under the animal present in the milking parlour.

21. An implement as claimed in any one of the preceding claims, characterized in that the milking robot (8) includes a carrier frame (9) which is connected movably to the upper frame portion (4) as well as a robot arm construction (31) which is movable in a predominantly vertical direction relative to the carrier frame (9) by means of an operating cylinder (32).

22. An implement as claimed in claim 21, characterized in that the robot arm construction (31) is connected movably to the carrier frame (9) by means of a quadrangular pivot construction (33).

23. An implement as claimed in claim 22, characterized in that one of the arms (35) of the quadrangular pivot construction (33), which forms the connection between the robot arm construction (31) and the carrier frame (9), is adjustable in length.

24. An implement as claimed in any one of claims 21 to 23, characterized in that the robot arm construction (31) includes a predominantly vertical robot arm (36) as well as robot arms (37) which are movable in a predominantly horizontal plane.

25. An implement as claimed in claim 24, characterized in that the operating cylinder (32) is operative between the carrier frame (9) and the predominantly vertical robot arm (36).

26. An implement as claimed in any one of claims 21 to 25, characterized in that the operating cylinder (32) is constituted by a servo-pneumatic positioning cylinder.

27. An implement as claimed in any one of claims 21 to 26, characterized in that the housing of the operating cylinder (32) is disposed pivotably on the carrier frame (9).

28. An implement as claimed in any one of claims 21 to 27, characterized in that the operating cylinder (32) includes an overload protection device, whereby, as soon as the animal present in the milking parlour exercises force on the robot arm construction (31), the latter can be moved downwardly.

29. An implement as claimed in claim 24 or 25, characterized in that near the end of the last robot arm (46) of the robot arm construction (31) there are provided thereon teat cups (53, 54) which are connectable to the teats of an animal present in the milking parlour as well as a sensor (55) for determining the position of the teats of the said animal.

30. An implement as claimed in claim 29, characterized in that the sensor (55) is accommodated in a housing provided on the last robot arm (46) and having at its upper side a contact switch (56), by means of which the milking robot (8), when it has arrived in such a high position under the animal in the milking parlour that it contacts the animal's abdomen, is moved downwardly again.

## Patentansprüche

1. Vorrichtung zum Melken von Tieren, wie z. B. Kühen, mit einem Melkstand und einem Melkroboter (8) zum automatischen Melken von Tieren, wobei die Vorrichtung einen fest angeordneten Rahmen (3) hat, der einen ersten oberen, eine geradlinige Führung für den Melkroboter (8) bildenden Rahmenteil (4) aufweist und eine weitere geradlinige Führung für den Melkroboter (8), wobei beide Führungen parallel zueinander seitlich des Melkstandes in dessen Längsrichtung angeordnet sind, wobei der Rahmen (3) einen zweiten unteren, die weitere Führung bildenden Rahmenteil (5) aufweist, wobei entlang einer Unterseite des zweiten Rahmenteiles (5) Melkroboterarme (37) unter das im Melkstand befindliche Tier bewegbar sind, wobei beide Rahmenteile (4, 5) im wesentlichen oberhalb des Bodens in einigem Abstand zueinander angeordnet sind, wobei der erste Rahmenteil (4) durch eine Schiene gebildet ist, wobei der Melkroboter (8) einen Tragrahmen (9) für weitere Teile des Melkroboters (8) aufweist und der Tragrahmen (9) des Melkroboters (8) mit einer Rolle (30) versehen ist, die längsseits des Tragrahmens (9) angeordnet ist, und mittels der der Tragrahmen (9) während seiner Bewegung entlang des oberen Rahmenteiles an beiden Rahmenteilen (4, 5) abgestützt ist,
dadurch gekennzeichnet, daß der untere Rahmenteil (5) durch eine Schiene in Form eines U-förmigen Balkens gebildet ist, der derart angeordnet ist, daß seine aufrechten Seiten nach unten gerichtet sind, wobei die Rolle (30) zwischen den beiden aufrechten Seiten des U-förmigen Balkens bewegbar ist.

2. Vorrichtung nach Anspruch 1,
dadurch gekennzeichnet, daß der Melkroboter (8) auf dem ersten und dem zweiten Rahmenteil (4, 5) aufgelagert ist.

3. Vorrichtung nach den Ansprüchen 1 oder 2,
dadurch gekennzeichnet, daß der Melkroboter (8) in vertikaler Richtung gesehen näher am Boden angeordnet ist als die Rahmenteile (4, 5).

4. Vorrichtung nach einem der vorhergehenden Ansprüche,
dadurch gekennzeichnet, daß der erste Rahmenteil (4) im wesentlichen über dem zweiten Rahmenteil (5) angeordnet ist.

5. Vorrichtung nach einem der vorhergehenden Ansprüche,
dadurch gekennzeichnet, daß ein Motor (19) zum Bewegen des Melkroboters (8) relativ zu den Rahmenteilen (4, 5) vorgesehen ist.

6. Vorrichtung nach Anspruch 5,
dadurch gekennzeichnet, daß der Tragrahmen (9) mittels Rollen (16) entlang des oberen Rahmenteiles (4) verschiebbar ist.

7. Vorrichtung nach Anspruch 6,
dadurch gekennzeichnet, daß sich der Tragrahmen (9) von dem oberen Rahmenteil (4) bis etwa zu der Höhe erstreckt, in der der untere Rahmenteil (5) angeordnet ist.

8. Vorrichtung nach den Ansprüchen 6 oder 7,
dadurch gekennzeichnet, daß der Tragrahmen (9) an oder nahe seinen beiden Enden zwei Rollenpaare (16) aufweist, mit denen er an dem oberen Rahmenteil (4) verfahrbar aufgehängt ist.

9. Vorrichtung nach einem der Ansprüche 5 bis 8,
dadurch gekennzeichnet, daß der Motor (19) an dem Tragrahmen (9) angeordnet ist, wobei ferner eine angetriebene Rolle (20) vorgesehen ist, mittels der der Tragrahmen (9) an dem oberen Rahmenteil (4) entlang verfahrbar ist.

10. Vorrichtung nach Anspruch 9,
dadurch gekennzeichnet, daß der Motor (19) an dem Tragrahmen (9) verfahrbar angeordnet ist und eine Feder (21) aufweist, die die angetriebene Rolle (20) an den oberen Rahmenteil (4) andrückt.

11. Vorrichtung nach Anspruch 10,
dadurch gekennzeichnet, daß die angetriebene Rolle (20) an dem oberen Rahmenteil (4) abrollbar und die Feder (21) zwischen dem Motor (19) und dem Tragrahmen (9) wirksam ist.

12. Vorrichtung nach den Ansprüchen 10 oder 11,
dadurch gekennzeichnet, daß die Rolle (20) mit einer Gummi-Oberfläche versehen ist.

13. Vorrichtung nach einem der vorhergehenden Ansprüche,
dadurch gekennzeichnet, daß der Melkroboter (8) einen Sensor (22) aufweist, mittels dessen der Melkroboter (8) aus einer Ruhelage in die Längsrichtung des Melkstandes bis zu einer Ausgangslage zu bewegen ist, von der aus die Arme (37) des Melkroboters (8) unter das in dem Melkstand befindliche Tier bewegt werden und den Bewegungen des Tieres in Längsrichtung des Melkstandes zu folgen ist.

14. Vorrichtung nach Anspruch 13,
dadurch gekennzeichnet, daß ein Stützelement (23) vorgesehen ist, das gegen die Rückseite des Tieres zu bewegen und zum Zusammenwirken mit dem Sensor (22) geeignet ist, derart, daß das Stützelement (23) und dadurch auch der Melkroboter (8) Bewegungen des Tieres in Längsrichtung des Melkstandes folgt, wobei der Abstand zwischen dem Stützelement und dem Sensor in Längsrichtung beibehalten bleibt.

15. Vorrichtung nach Anspruch 14,
dadurch gekennzeichnet, daß das Stützelement (23) eine Platte (26) aufweist, die derart angeordnet ist, daß sie seitlich über die Rahmenteile (4, 5) hinausragt, und daß von dem tatsächlichen Abstand zwischen der Platte (26) und dem Sensor (22) ein Steuersignal für den Motor (19) abgeleitet wird, um den Melkroboter (8) in Längsrichtung des Melkstandes zu bewegen, wobei mittels des Steuersignals der Abstand zwischen der Platte (26) und dem Sensor (22) auf einen vorgegebenen Wert zurückgestellt wird.

16. Vorrichtung nach den Ansprüchen 14 oder 15,
dadurch gekennzeichnet, daß das Stützelement (23) an dem Melkstand-Boden derart angeordnet ist, daß es relativ zu diesem mittels eines Gestänges zu verschwenken ist.

17. Vorrichtung nach Anspruch 16,
dadurch gekennzeichnet, daß das Gestänge durch eine Viergelenk-Konstruktion, insbesondere durch eine Parallelogramm-Konstruktion (24) gebildet ist.

18. Vorrichtung nach einem der Ansprüche 14 bis 17,
dadurch gekennzeichnet, daß das Stützelement (23) nach seiner Entriegelung unter Federdruck gegen die Rückseite des in dem Melkstand befindlichen Tieres gedrückt wird.

19. Vorrichtung nach Anspruch 18,
dadurch gekennzeichnet, daß das Stützelement (23) durch den Melkroboter (8) verriegelt wird, wenn sich dieser in der Ruhelage befindet.

20. Vorrichtung nach den Ansprüchen 18 oder 19,
dadurch gekennzeichnet, daß das Stützelement (23) entriegelt wird, wenn der Melkroboter (8) aus der Ruhelage in die Längsrichtung des Melkstandes zu der Ausgangslage bewegt wird, in der die Arme (37) des Melkroboters (8) unter das in dem Melkstand befindliche Tier bewegt werden.

21. Vorrichtung nach einem der vorhergehenden Ansprüche,
dadurch gekennzeichnet, daß der Melkroboter (8) einen Tragrahmen (9) aufweist, der mit dem oberen Rahmenteil (4) bewegbar verbunden ist, sowie eine Roboterarm-Konstruktion (31), die mittels eines Arbeitszylinders (32) in im wesentlichen vertikaler Richtung relativ zu dem Tragrahmen (9) zu bewegen ist.

22. Vorrichtung nach Anspruch 21,
dadurch gekennzeichnet, daß die Roboterarm-Konstruktion (31) mittels einer Viergelenk-Schwenkvorrichtung (33) mit dem Tragrahmen (9) verbunden ist.

23. Vorrichtung nach Anspruch 22,
dadurch gekennzeichnet, daß eine der Stangen (35) der Viergelenk-Schwenkvorrichtung (33), mittels der die Roboterarm-Konstruktion (31) mit dem Tragrahmen (9) verbunden ist, längenverstellbar ist.

24. Vorrichtung nach einem der Ansprüche 21 bis 23,
dadurch gekennzeichnet, daß die Roboterarm-Konstruktion (31) einen im wesentlichen vertikalen Roboterarm (36) sowie Roboterarme (37) aufweist, die in im wesentlichen horizontaler Richtung bewegbar sind.

25. Vorrichtung nach Anspruch 24,
dadurch gekennzeichnet, daß der Arbeitszylinder (32) zwischen dem Tragrahmen (9) und dem im wesentlichen vertikalen Roboterarm (36) wirksam ist.

26. Vorrichtung nach einem der Ansprüche 21 bis 25,
dadurch gekennzeichnet, daß der Arbeitszylinder (32) durch einen servopneumatischen Stellzylinder gebildet ist.

27. Vorrichtung nach einem der Ansprüche 21 bis 26,
dadurch gekennzeichnet, daß der Zylinder des Arbeitszylinders (32) an dem Tragrahmen (9) schwenkbar angeordnet ist.

28. Vorrichtung nach einem der Ansprüche 21 bis 27,
dadurch gekennzeichnet, daß der Arbeitszylinder (32) einen Überlastungsschutz aufweist, wobei die Roboterarm-Konstruktion (31) nach unten zu bewegen ist, sobald das in dem Melkstand befindliche Tier eine Kraft auf sie ausübt.

29. Vorrichtung nach den Ansprüchen 24 oder 25,
dadurch gekennzeichnet, daß an dem letzten Roboterarm (46) der Roboterarm-Konstruktion (31) nahe dessen Ende Zitzenbecher (53, 54) angebracht sind, die an die Zitzen eines in dem Melkstand befindlichen Tieres anzuschließen sind, sowie ein Sensor (55) zur Ermittlung der Lage der Zitzen des Tieres.

30. Vorrichtung nach Anspruch 29,
dadurch gekennzeichnet, daß der Sensor (55) in einem Gehäuse untergebracht ist, das an dem letzten Roboterarm (46) angeordnet ist und an seiner Oberseite einen Kontaktschalter (56) aufweist, mittels dessen der Melkroboter (8) wieder nach unten bewegt wird, wenn er unter dem in dem Melkstand befindlichen Tier in eine solch hohe Position gelangt ist, daß er den Bauch des Tieres berührt.

## Revendications

1. Installation pour traire des animaux, tels que des vaches, comprenant une stalle de traite et un robot trayeur (8) pour la traite automatique d'animaux, l'installation ayant un bâti fixe (3) comprenant une première partie de châssis supérieure (4) formant un élément de guidage rectiligne pour le robot trayeur (8) et ayant un autre élément de guidage rectiligne pour le robot trayeur (8), les deux éléments de guidage étant parallèles l'un à l'autre et s'étendant dans le sens longitudinal sur le côté de la stalle de traite, le bâti (3) comprenant une deuxième partie de châssis inférieure (5) formant ledit autre élément de guidage le long de la face inférieure de ladite seconde partie de châssis (5) les bras du robot trayeur (37) sont mobiles sous l'animal présent dans la stalle de traite, les deux parties de châssis (4, 5) étant situées sensiblement au-dessus du sol, à une certaine distance l'une de l'autre, la première partie de châssis (4) étant constituée d'un rail, tandis que le robot trayeur (8) comprend un châssis porteur (9) pour les autres parties du robot trayeur (8) et le châssis porteur (9) du robot trayeur (8) étant pourvu d'un élément à galet (30) qui est disposé le long du châssis porteur (9), au moyen duquel le châssis porteur (9), lorsqu'il est mis le long de la partie de châssis supérieure, repose sur les deux parties de châssis (4, 5), caractérisée en ce que la partie de châssis inférieure (5) est constituée d'un rail sous la forme d'une poutre profilée en U, qui est montée de telle façon que ses ailes verticales sont dirigées vers le bas, tandis que l'élément à galet (30) est mobile entre les deux ailes verticales de la poutre profilée en U.

2. Installation selon la revendication 1, caractérisée en ce que le robot trayeur (8) repose sur la première et la deuxième parties de châssis (4, 5).

3. Installation selon la revendication 1 ou 2, caractérisée en ce que le robot trayeur (8) est disposé, en étant vu en sens vertical, plus près du sol que lesdites parties de châssis (4, 5).

4. Installation selon l'une quelconque des revendications précédentes, caractérisée en ce que la première partie (4) du châssis est située principalement au-dessus de la deuxième partie (5) du châssis.

5. Installation selon l'une quelconque des revendications précédentes, caractérisée en ce qu'il est prévu un moteur (19) pour déplacer le robot trayeur (8) par rapport aux parties (4, 5) du châssis.

6. Installation selon la revendication 5, caractérisée en ce que le châssis porteur (9) peut être déplacé à l'aide d'éléments à galets (16) le long de la partie de châssis supérieure (4).

7. Installation selon la revendication 6, caractérisée en ce que le châssis porteur (9) s'étend à partir de la partie de châssis supérieure (4) approximativement jusqu'à la hauteur à laquelle est située la partie de châssis inférieure (5).

8. Installation selon la revendication 6 ou 7, caractérisée en ce que le châssis porteur (9) comprend, à ses extrémités ou près d'elles, deux paires (16) d'éléments à galets au moyen desquels le châssis porteur (9) est suspendu à la partie de châssis supérieure (4) de manière à être mobile le long de celle-ci.

9. Installation selon l'une quelconque des revendications 5 à 8, caractérisée en ce que le moteur (19) est disposé sur le châssis porteur (9), tandis qu'il est prévu en outre un galet (20) entraîné par un moteur, au moyen duquel le châssis porteur (9) peut être déplacé le long de la partie de châssis supérieure (4).

10. Installation selon la revendication 9, caractérisée en ce que le moteur (19) est prévu de manière mobile sur le châssis porteur (9) et comprend un organe à ressort (21) poussant le galet (20) entraîné par le moteur contre la partie de châssis supérieure (4).

11. Installation selon la revendication 10, caractérisée en ce que le galet (20) entraîné par le moteur est mobile le long de la partie de châssis supérieure (4) et l'organe à ressort (21) agit entre le moteur (19) et le châssis porteur (9).

12. Installation selon la revendication 10 ou 11, caractérisée en ce que le galet (20) est muni d'une surface caoutchoutée.

13. Installation selon l'une quelconque des revendications précédentes, caractérisée en ce que le robot trayeur (8) comporte un capteur (22) au moyen duquel le robot trayeur (8) peut être dirigé à partir d'une position de repos, dans le sens longitudinal de la stalle de traite, jusqu'à une position de départ, à partir de laquelle les bras (37) du robot trayeur (8) sont entraînés jusque sous l'animal présent dans la stalle de traite, en pouvant accompagner les mouvements de l'animal dans le sens longitudinal de la stalle de traite.

14. Installation selon la revendication 13, caractérisée en ce qu'il est prévu un élément de support (23) qui est mobile contre le côté postérieur de l'animal et peut coopérer avec le capteur (22), c'est-à-dire de telle manière que, quand l'animal se déplace dans le sens longitudinal de la stalle de traite, l'élément de support (23) accompagne son mouvement, et par conséquent le robot trayeur (8) aussi, tout en maintenant la distance entre l'élément de support et le capteur dans le sens longitudinal.

15. Installation selon la revendication 14, caractérisée en ce que l'élément de support (23) comporte une plaque (26) qui est disposée de telle sorte qu'elle s'étend latéralement au-delà des parties (4, 5) du châssis, et en ce que, d'après la distance effective entre la plaque (26) et le capteur (22), on obtient un signal de commande du moteur (19) pour entraîner le robot trayeur (8) dans le sens longitudinal de la stalle de traite, à l'aide duquel signal de commande la distance entre la plaque (26) et le capteur (22) est réajustée sur une valeur de réglage initiale.

16. Installation selon la revendication 14 ou 15, caractérisée en ce que l'élément de support (23) est disposé sur le plancher de la stalle de traite de telle manière qu'il est pivotant par rapport à celui-ci par l'intermédiaire d'un système de barres.

17. Installation selon la revendication 16, caractérisée en ce que le système de barres est constitué par une structure quadrangulaire, plus spécifiquement par une structure en parallélogramme (24).

18. Installation selon l'une quelconque des revendications 14 à 17, caractérisée en ce qu'après avoir été déverrouillé l'élément de support (23) est poussé sous la pression d'un ressort contre le côté postérieur de l'animal présent dans la stalle de traite.

19. Installation selon la revendication 18, caractérisée en ce que l'élément de support (23) est verrouillée par le robot trayeur (8) quand ce dernier est en position de repos.

20. Installation selon la revendication 18 ou 19, caractérisée en ce que l'élément de support (23) est déverrouillé quand le robot trayeur (8) est dirigé à partir de la position de repos, dans le sens longitudinal de la stalle de traite, jusqu'à la position de départ, à partir de laquelle les bras (37) du robot trayeur (8) sont entraînés jusque sous l'animal présent dans la stalle de traite.

21. Installation selon l'une quelconque des revendications précédentes, caractérisée en ce que le robot trayeur (8) comporte un châssis porteur (9) qui est relié de manière mobile à la partie de châssis supérieure (4), ainsi qu'une structure (31) de bras de robot qui est mobile dans une direction principalement verticale par rapport au châssis porteur (9) au moyen d'un vérin actionneur (32).

22. Installation selon la revendication 21, caractérisée en ce que la structure (31) du bras de robot est reliée de manière mobile au châssis porteur (9) au moyen d'une structure articulée quadrangulaire (33).

23. Installation selon la revendication 22, caractérisée en ce qu'un des bras (35) de la structure articulée quadrangulaire (33) qui forme la liaison entre la structure (31) du bras de robot et le châssis porteur (9) est réglable en longueur.

24. Installation selon l'une quelconque des revendications 21 à 23, caractérisée en ce que la structure (31) du bras du robot comprend un bras de robot (36) principalement vertical, ainsi que des bras de robot (37) qui sont mobiles dans un plan principalement horizontal.

25. Installation selon la revendication 24, caractérisée en ce que le vérin actionneur (32) agit entre le châssis porteur (9) et le bras de robot (36) principalement vertical.

26. Installation selon l'une quelconque des revendications 21 à 25, caractérisée en ce que le vérin actionneur (32) est constitué par un vérin positionneur servo-pneumatique.

27. Installation selon l'une quelconque des revendications 21 à 26, caractérisée en ce que le boîtier du vérin actionneur (32) est disposé de manière pivotante sur le châssis porteur (9).

28. Installation selon l'une quelconque des revendications 21 à 27, caractérisée en ce que le vérin actionneur (32) comporte un dispositif de protection contre les surcharges au moyen duquel, dès que l'animal présent dans la stalle de traite exerce une force sur la structure (31) du bras de robot, cette dernière peut être entraînée vers le bas.

29. Installation selon la revendication 24 ou 25, caractérisée en ce que, près de l'extrémité du dernier bras (46) de la structure (31) du bras de robot, sont prévus sur celui-ci des godets de trayons (53, 54) qui peuvent être reliés aux trayons d'un animal présent dans la stalle de traite, ainsi qu'un capteur (55) pour déterminer la position des trayons dudit animal.

30. Installation selon la revendication 29, caractérisée en ce que le capteur (55) est logé dans un boîtier prévu sur le dernier bras (46) du robot et ayant sur son côté supérieur un contact interrupteur (56) au moyen duquel le robot trayeur (8), quand il est arrivé en une position si haute sous l'animal dans la stalle de traite, qu'il entre en contact avec l'abdomen de l'animal, est à nouveau entraîné vers le bas.
